# EUROPEAN PATENT APPLICATION

(11) **EP 4 322 288 A1**
(43) Date of publication of application: **14.02.2024**
(21) Application number: 23796660.1
(22) Date of filing: 11.04.2023
(51) Int. Cl.: H01M 10/6569, H01M 10/647, H01M 10/613, H01M 50/103, H01M 10/6567, H01M 10/04, A62D 1/00, H01M 10/654

(54) **PRISMATIC SECONDARY BATTERY WITH HEAT ABSORBER EMBEDDED THEREIN**

(30) Priority: 29.04.2022 KR 20220053375; 23.02.2023 KR 20230024456
(71) Applicant: LG Energy Solution, Ltd., Seoul 07335 (KR)
(72) Inventor: SON, Chang Keun, Daejeon 34122 (KR); LEE, Jin Kyu, Daejeon 34122 (KR); HWANG, Won Pill, Daejeon 34122 (KR); YOON, Doo Han, Daejeon 34122 (KR); LEE, Yong Ho, Daejeon 34122 (KR); KIM, Sun Jae, Daejeon 34122 (KR)
(74) Representative: Plasseraud IP
(86) International application number: PCT/KR2023/004856
(87) International publication number: WO 2023/211011

(57) **Abstract**

A prismatic secondary battery includes a case made of a metal, at least one electrode assembly accommodated in the case, at least one heat absorbing pouch in contact with the electrode assembly, and an electrolyte filling the case, wherein the heat absorbing pouch includes an absorbent material impregnated with a liquid vaporized by absorbing heat generated from the electrode assembly, and a pouch configured to seal and accommodate the absorbent material impregnated with the liquid.

## Description

### [Technical Field]

The present invention relates to a prismatic secondary battery in which thermal diffusion is prevented when thermal runaway occurs, thereby suppressing a heat propagation phenomenon in which other nearby secondary batteries are consecutively overheated.

This application claims the benefit of priority based on Korean Patent Application No. 10-2022-0053375, filed on April 29, 2022, and Korean Patent Application No. 10-2023-0024456, filed on February 23, 2023, and the entire contents of the Korean patent applications are incorporated herein by reference.

### [Background Technology of the Invention]

Secondary batteries are rechargeable unlike primary batteries and are being researched and developed a lot due to their compact size and high capacity potential. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable or dischargeable power generating device having a structure in which an electrode and a separator are stacked.

Since secondary batteries are required to be continuously used for a long time, it is necessary to effectively control the heat generated during a charging or discharging process. When the cooling of secondary batteries is not smoothly performed, a positive feedback chain reaction, in which an increase in temperature causes an increase in current, and the increase in current causes the temperature to rise again, occurs, eventually leading to a catastrophic state of thermal runaway.

Also, when secondary batteries are grouped in the form of a module or a pack, a thermal propagation phenomenon occurs in which other nearby secondary batteries are consecutively overheated due to thermal runaway occurring in one secondary battery. Furthermore, since there is a high risk of fire due to ignition sources such as a combustible gas ejected from an overheated secondary battery and a heating electrode, it is necessary to suppress such risk of ignition.

### [Related Art Documents]

(Patent Document 001) Korean Patent Registration No. 10-1270796 (published on June 25, 2013)

### [Description of the Invention]

### [Technical Problem]

An object of the present invention is to provide a secondary battery capable of effectively suppressing and preventing a thermal propagation phenomenon due to thermal runaway generated in a secondary battery.

However, the technical objects to be solved by the present invention are not limited to the above-described object, and other objects not described herein will be clearly understood by those skilled in the art from the following descriptions of the present invention.

### [Technical Solution]

According to the present invention, there is provided a prismatic secondary battery including a case made of a metal, at least one electrode assembly accommodated in the case, at least one heat absorbing pouch in contact with the at least one electrode assembly, and an electrolyte filling the case, wherein the at least one heat absorbing pouch includes an absorbent material impregnated with a liquid vaporized by absorbing heat y, and a pouch configured to seal and accommodate the absorbent material.

The at least one electrode assembly may be a plurality of electrode assemblies, and the at least one heat absorbing pouch may be disposed between the plurality of electrode assemblies.

The at least one heat absorbing pouch may be provided with a fragile portion that fractures when an internal pressure of the at least one heat absorbing pouch increases.

The at least one electrode assembly may be a winding type or a stack type.

The fragile portion of the at least one heat absorbing pouch may be disposed toward a foil tab of the at least one electrode assembly.

The at least one electrode assembly may be a unidirectional electrode assembly in which a pair of foil tabs are disposed on a same surface, and the fragile portion of the at least one heat absorbing pouch may be provided as a pair of fragile portions so that the pair of fragile portions may be disposed to be spaced apart from each other at positions corresponding to the pair of foil tabs.

The absorbent material may be a super absorbent matrix, for example, a super absorbent polymer (SAP) or a super absorbent fiber (SAF).

The liquid may be water or water mixed with an additive, and the additive may be a material for lowering the surface tension of water or a fire extinguishing agent.

The prismatic secondary battery may further include a swelling tape configured to bring the at least one electrode assembly and the at least one heat absorbing pouch into contact with each other.

The at least one electrode assembly may be a plurality of electrode assemblies, the at least one heat absorbing pouch may be disposed between the plurality of electrode assemblies, and the swelling tape may be attached along an outer perimeter of the plurality of electrode assemblies.

The swelling tape may extend in a longitudinal direction when in contact with the electrolyte filling the case.

### [Advantageous Effects]

According to a prismatic secondary battery of the present invention having the configuration described above, heat is rapidly absorbed and dispersed in an environment in which a temperature rapidly rises as in normal rapid charging, thereby suppressing the occurrence of thermal runaway and maintaining performance and lifetime without a large increase in temperature.

In addition, according to the present invention, when a thermal runaway phenomenon occurs in a secondary battery, a liquid impregnated in an absorbent material in a heat absorbing pouch absorbs heat and vaporizes. When the vaporized gas rises above a certain pressure, the gas fractures the heat absorbing pouch and is ejected to cool ignition sources such as an inflammable gas discharged from an overheated electrode assembly and a heating electrode and suppress flames, thereby considerably reducing the risk of fire.

However, the technical effects obtainable through the present invention are not limited to the above-described effects, and other effects not described herein will be clearly understood by those skilled in the art from the following descriptions of the present invention.

### [Brief Description of the Drawings]

The accompanying drawings illustrate exemplary embodiments of the present invention and, together with the detailed description of the present invention, serve to provide further understanding of the technical spirit of the present invention. However, the present invention is not to be construed as being limited to the drawings.
FIG. 1 is a view illustrating a prismatic secondary battery according to one embodiment of the present invention.
FIG. 2 is an exploded perspective view illustrating a detailed configuration of the prismatic secondary battery of FIG. 1.
FIG. 3 is an exploded view illustrating a modified configuration of the prismatic secondary battery of FIG. 1.
FIG. 4 is a cross-sectional view illustrating the prismatic secondary battery along cutting line A-A' of FIG. 1.
FIG. 5 is a view illustrating a state in which gas ejected from a heat absorbing pouch cools an ignition source discharged from an electrode assembly.
FIG. 6 is an exploded perspective view illustrating a prismatic secondary battery according to another embodiment of the present invention.
FIG. 7 is a cross-sectional view of the prismatic secondary battery of FIG. 6. [Best Mode for Carrying Out the Invention]

Since the present invention may be variously changed and have various embodiments, specific embodiments will be described in detail below.

However, it should be understood that there is no intention to limit the present invention to particular embodiments, and on the contrary, the present invention is to cover all modifications, equivalents, and alternatives falling within the spirit and scope of the present invention.

In this application, it should be understood that terms such as "include" and "have" are intended to indicate that there is a feature, number, step, operation, component, part, or a combination thereof described in the specification, and they do not exclude in advance the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case of being disposed at the bottom as well as the top.

The present invention relates to a prismatic secondary battery, and in an example, the prismatic secondary battery includes a case made of a metal, at least one electrode assembly accommodated in the case, at least one heat absorbing pouch in contact with the electrode assembly, and an electrolyte filling the case.

Here, the heat absorbing pouch includes an absorbent material impregnated with a liquid vaporized by absorbing heat generated from the electrode assembly, and a pouch for sealing and accommodating the absorbent material impregnated with the liquid.

The heat absorbing pouch is provided with a fragile portion that preferentially fractures when the liquid impregnated in the absorbent material vaporizes and the internal pressure increases.

Therefore, according to the present invention, through a heat absorbing action of the hear absorbing pouch in direct contact with the electrode assembly, heat is rapidly absorbed and dispersed in an environment in which a temperature rapidly rises as in normal rapid charging, thereby suppressing the occurrence of thermal runaway and maintaining performance and lifetime without a large increase in temperature.

In addition, according to the present invention, when a thermal runaway phenomenon occurs in a secondary battery, a liquid impregnated in the absorbent material in the heat absorbing pouch absorbs heats and vaporizes. When the vaporized gas rises above a certain pressure, the gas fractures the heat absorbing pouch and is ejected to cool ignition sources such as an inflammable gas ejected from the overheated electrode assembly and a heating electrode and suppress flames, thereby considerably reducing the risk of fire.

### [Modes for Carrying Out the Invention]

Hereinafter, specific embodiments of a battery pack of the present invention will be described with reference to the accompanying drawings. For reference, front and rear directions or up, down, left, and right directions for designating relative positions used in the following description are intended to help the understanding of the present invention and are based on directions shown in the drawings unless otherwise specified.

### [First embodiment]

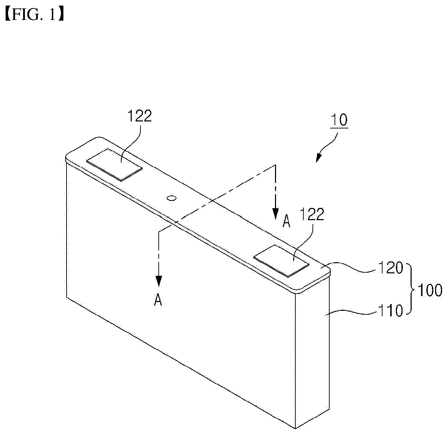

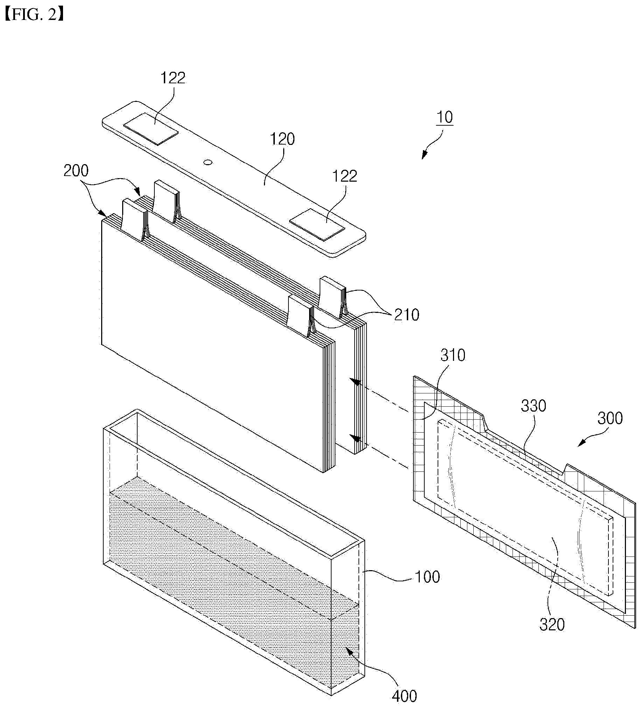

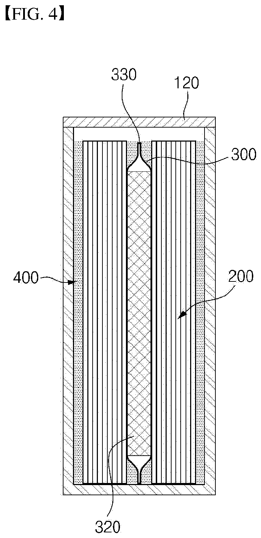

FIG. 1 is a view illustrating a prismatic secondary battery 10 according to a first embodiment of the present invention. FIG. 2 is an exploded perspective view illustrating a detailed configuration of the prismatic secondary battery 10 of FIG. 1. FIG. 4 is a cross-sectional view illustrating the prismatic secondary battery along cutting line A-A' of FIG. 1.

As can be seen in the drawing, the present invention relates to the prismatic secondary battery 10. The prismatic secondary battery 10 includes a case 100 made of a metal, at least one electrode assembly 200 accommodated in the case 100, at least one heat absorbing pouch 300 in contact with the electrode assembly 200, and an electrolyte 400 filling the case 100.

As the case 100 may be a frame constituting the body of the prismatic secondary battery 10, when the prismatic secondary battery 10 forms a battery module or battery pack, the case 100 may perform a basic insulating action for other adjacent prismatic secondary batteries 10. In the illustrated embodiment, the case 100 includes a main case 110 with an open upper surface and a cap plate 120 blocking the upper opening of the main case 110 and including positive and negative electrode terminals 122. The electrode terminals 122 are electrically connected to foil tabs 210 of the electrode assembly 200.

In the electrode assembly 200, a plurality of unit cells including positive and negative electrodes each coated with an active material and a separator interposed between the positive electrode and the negative electrode are stacked. The electrode assembly 200 provided in the prismatic secondary battery 10 of the present invention may be a winding type electrode assembly such as a jelly roll type electrode assembly, or a stack type electrode assembly. The accompanying drawings show that the stacked electrode assembly 200 is provided.

The heat absorbing pouch 300 in contact with the electrode assembly 200 primarily serves to prevent overheating by absorbing heat generated from the electrode assembly 200. In addition, the heat absorbing pouch 300 has a fire extinguishing function of suppressing flame generation when a thermal runaway phenomenon in which the electrode assembly 200 overheats occurs.

To this end, the heat absorbing pouch 300 provided in the present invention includes an absorbent material 320 impregnated with a liquid vaporized by absorbing heat from the electrode assembly 200, and a pouch 310 for sealing and accommodating the absorbent material 320 impregnated with the liquid.

In the first embodiment of the present invention, the absorbent material 320 may be an absorbent material 320 including a super absorbent matrix, for example, a super absorbent polymer (SAP) or a super absorbent fiber (SAF). The super absorbent matrix is porous or fibrous and exhibits a capillary action, and thus it is possible to absorb a large amount of liquid, and SAFs may be made into a fiber form, such as a nonwoven fabric, by processing SAPs.

In the present invention, specific types of the SAP and the SAF produced therefrom are not particularly limited, and any material having an excellent ability to absorb a fluid, particularly, water, may be used without limitation. In the present invention, examples of the SAP may include at least one selected from the group consisting of polyacrylic acid, a polyacrylic salt, a polyacrylate graft polymer, starch, crosslinked carboxymethylated cellulose, an acrylic acid copolymer, a hydrolyzed starch-acrylonitrile graft copolymer, a starch-acrylic acid graft copolymer, a saponified vinyl acetate-acrylic acid ester copolymer, a hydrolyzed acrylonitrile copolymer, a hydrolyzed acrylamide copolymer, an ethylene-maleic anhydride copolymer, an isobutylene-maleic anhydride copolymer, polyvinylsulfonic acid, polyvinylphosphonic acid, polyvinyl phosphoric acid, polyvinyl sulfuric acid, sulfonated polystyrene, polyvinylamine, polydialkylaminoalkyl(meth)acrylamide, polyethyleneimine, polyallylamine, polyallylguanidine, polydimethyldiallylammonium hydroxide, a quaternized polystyrene derivative, guanidine-modified polystyrene, quaternized poly((meth)acrylamide, oolyvinylguanidine, and a mixture thereof and may preferably include at least one selected from the group consisting of a crosslinked polyacrylic salt, crosslinked polyacrylic acid, and a crosslinked acrylic acid copolymer, but the present invention is not limited thereto.

The type of acrylic acid copolymer used as the SAP in the present invention is not particularly limited, but preferably, the acrylic acid copolymer may be a copolymer including at least one comonomer selected from the group consisting of an acrylic acid monomer, maleic acid, itaconic acid, acrylamide, 2-acrylamide-2-methylpropanesulfonic acid 2-(meth)acryloylethanesulfonic acid, 2-hydroxyethyl(meth)acrylate, and styrenesulfonic acid.

In the present invention, the amount of water absorbed by the SAP may be in a range of 10 g/g to 500 g/g, and preferably 50 g/g to 200 g/g, but the present invention is not limited thereto. That is, 10 g to 500 g of water, preferably, 50 g to 200 g, may be absorbed per 1 g of the SAP.

In the present invention, the duration of a cooling effect may be improved as the amount of water absorbed by the SAP is increased. However, when the amount of water absorbed by the SAP exceeds 500 g/g, since the fluidity of the SAP increases, it may be difficult to maintain a shape of the SAP, which makes effective cooling impossible, and when the amount of water absorbed by the SAP is less than 100 g/g, the duration of a cooling effect is too short, which makes it ineffective.

Meanwhile, a large amount of liquid impregnated in the absorbent material 320, for example, water, absorbs heat generated from the electrode assembly 200 and then vaporizes when a temperature thereof exceeds a boiling point. Due to an increase in volume due to a phase change from liquid to gas, internal pressure acts on the pouch 310 that seals the absorbent material.

Here, the heat absorbing pouch 300 is provided with a fragile portion 330 that preferentially fractures when the liquid impregnated in the absorbent material 320 vaporizes and the internal pressure increases. The pouch 310 corresponding to a packaging material constituting the heat absorbing pouch 300 may be made using a flexible laminate sheet.

The laminate sheet may have a structure of three or more layers including an aluminum thin film layer, an inner resin layer formed inside the aluminum thin film layer, and an outer resin layer formed outside the aluminum thin film layer. For example, the inner resin layer may be made of casted polypropylene (CPP) or polypropylene (PP), and the outer resin layer may be made of polyethylene terephthalate (PET) or nylon.

Here, since the pouch 310 including the aluminum thin film layer is submerged in the electrolyte filling the case 100, the pouch 310 does not react with the electrolyte, and the electrolyte cannot penetrate thereinto. Thus, the pouch 310 may stably maintain strength for a long period of time.

For example, the electrolyte may be a salt having a structure such as A⁺B⁻. Here, A⁺ includes an alkali metal cation such as Li⁺, Na⁺, and K⁺, or an ion including a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O4⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Inside such an electrolyte, the pouch 310, which is made of the laminate sheet in which a resin layer is formed inside and outside the aluminum thin film layer, is not affected by the electrolyte and its durability is well maintained.

The fragile portion 330 of the heat absorbing pouch 300 is a portion which is processed by locally lowering the sealing strength of the pouch 310 to preferentially fracture by an increase in internal pressure due to vaporization of liquid. The pouch 310 may be sealed by heat-sealing edges of the laminate sheet surrounding the absorbent material 320, and the fragile portion 330 may be formed in such a way that its heat-sealing strength is lower than that of surrounding portions. For example, the fragile portion 330 may be formed by making the thickness thereof thinner than the surrounding portions, reducing strength by forming a notch, or locally removing the aluminum thin film layer for maintaining durability.

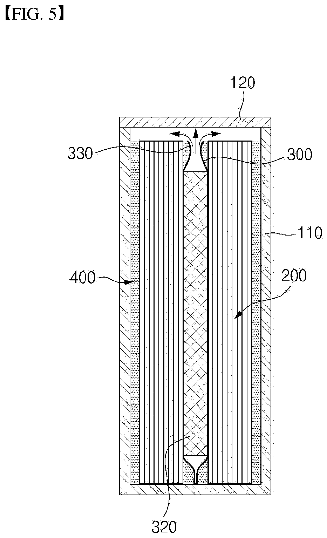

As described above, since the heat absorbing pouch 300 is provided with the fragile portion 330, as shown in FIG. 5, in a case in which a thermal runaway phenomenon occurs in the electrode assembly 200 and the electrode assembly 200 overheats, when a liquid impregnated in the absorbent material 320 in the heat absorbing pouch 300 absorbs heat and vaporizes, and the internal pressure of the vaporized gas rises above a certain pressure, the fragile portion 330 of the heat absorbing pouch 300 fractures, and gas is ejected. The gas ejected from the heat absorbing pouch 300 cools ignition sources such as a combustible gas discharged from the electrode assembly 200 and a heating electrode and suppresses flames, thereby considerably reducing the risk of fire.

In one embodiment of the present invention, the liquid impregnated in the absorbent material 320 may be water. Water is a material with the highest specific heat and latent heat among readily available liquids. Therefore, since the water contained in the absorbent material 320 changes its phase from a liquid state to a gas to absorb a lot of heat, water is suitable for application to the heat absorbing pouch 300 of the present invention.

In addition, an additive capable of enhancing a fire extinguishing function may be mixed with the water impregnated in the absorbent material 320. For example, the additive mixed with water may be a material for lowering the surface tension of water or may be a fire extinguishing agent. Examples of the material for lowering the surface tension of water may include a wetting agent or a surfactant. When the surface tension of water is reduced, the penetration effect of water increases, thereby enhancing the fire extinguishing effect on ignition sources such as heating electrodes and ignition particles.

A fire extinguishing agent is a generic name for agents themselves that exert a fire extinguishing function, and various currently commercialized powder fire extinguishing agents or liquid fire extinguishing agents may be applied. For example, a fire extinguishing agent under the brand name F-500 EA (manufactured by Hazard Control Technologies, Inc.) may be added to water.

In the first embodiment of the present invention, when the plurality of electrode assemblies 200 are accommodated in the case 100, the heat absorbing pouch 300 may be disposed between the electrode assemblies 200. For example, when two electrode assemblies 200 are provided as shown in FIGS. 2 to 5, the heat absorbing pouch 300 may be inserted and disposed between the two electrode assemblies 200. By inserting the heat absorbing pouch 300 between the plurality of electrode assemblies 200, it is possible to efficiently use a limited space, and it is also effective in suppressing heat propagation occurring between adjacent electrode assemblies 200.

In addition, the heat absorbing pouch 300 sandwiched between the two electrode assemblies 200 may also serve to partially buffer a swelling deformation force generated in the electrode assembly 200. Since the pouch 310, which is a packaging material of the heat absorbing pouch 300, is made of a flexible laminate sheet, and the absorbent material 320 sealed therein is made of a soft polymer material, because the heat absorbing pouch 300 may be deformed without great resistance to an external force, the heat absorbing pouch 300 may partially absorb the swelling deformation of the electrode assembly 200 to delay the deformation of the case 100 due to a swelling phenomenon.

In the drawings, the foil tabs 210, which are formed by punching uncoated portions of the positive electrode and the negative electrode, protrude from an upper portion of the electrode assembly 200. That is, the prismatic secondary battery 10 of the present invention is equipped with the unidirectional electrode assembly 200 in which a pair of foil tabs 210 are disposed together on the same surface, and each of the foil tabs 210 provided in the plurality of electrode assemblies 200 is bonded to the electrode terminal 122 of the cap plate 120.

Since the foil tab 210 of the electrode assembly 200 has relatively high resistance and easily overheats due to being a part where current is concentrated, when thermal runaway occurs in the electrode assembly 200, the ejection of combustible gas and heating electrodes is likely to be concentrated in the foil tab 210.

Therefore, in the first embodiment of the present invention, the fragile portion 330 of the heat absorbing pouch 300 is disposed in a direction toward the foil tab 210, that is, upward toward the cap plate 120 in the drawing. That is, the foil tab 210 of the electrode assembly 200 and the fragile portion 330 of the heat absorbing pouch 300 may be disposed in the same direction, and thus, as shown in FIG. 5, a cooling function and a fire extinguishing function of the heat absorbing pouch 300 may be effectively exhibited.

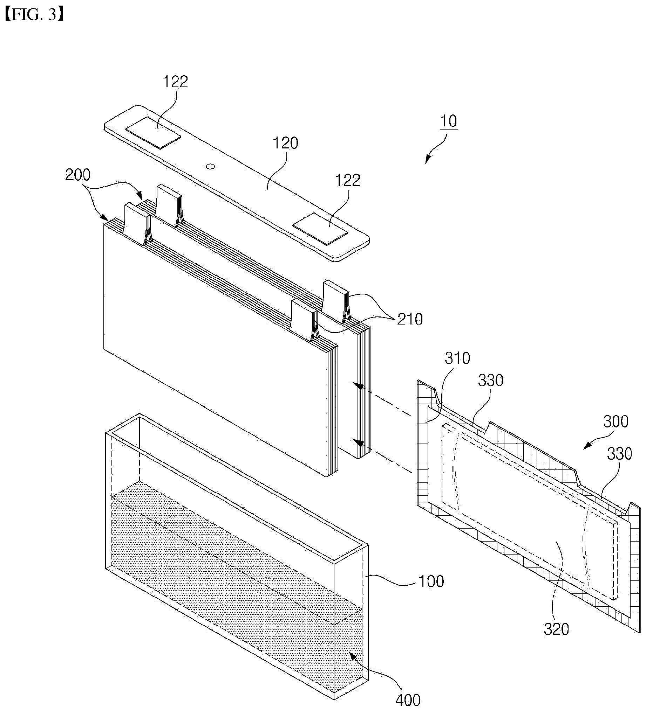

The fragile portion 330 of the heat absorbing pouch 300 is positioned as close as possible to a joint between the foil tab 210 and the electrode terminal 122 as far as the design allows, thereby immediately cooling a high-temperature gas discharged from the foil tab 210. For such a structure, in accordance with the prismatic secondary battery 10 being equipped with the unidirectional electrode assembly 200 in which the pair of foil tabs 210 are disposed on the same surface, as shown in FIG. 3, a pair of fragile portions 330 of the heat absorbing pouch 300 may be provided and separated and spaced apart from each other at positions corresponding to the pair of foil tabs 210. Since the fragile portion 330 is positioned closest to the foil tab 210, a cooling function and a fire extinguishing function can be immediately exhibited in case of overheating.

### [Second embodiment]

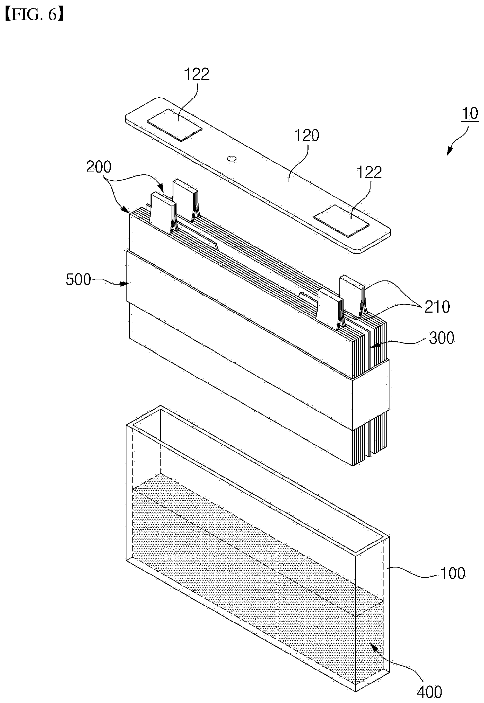

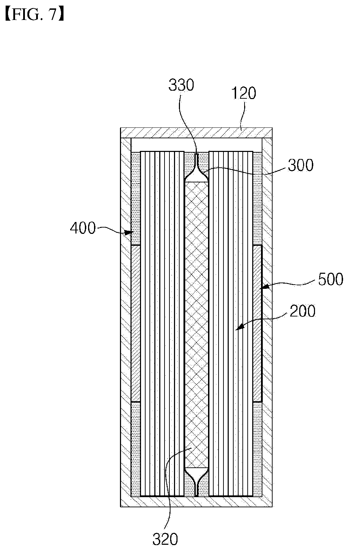

FIG. 6 is an exploded perspective view illustrating a prismatic secondary battery 10 according to another embodiment of the present invention. FIG. 7 is a cross-sectional view of the prismatic secondary battery 10 of FIG. 6.

In a second embodiment of the present invention, the prismatic secondary battery 10 further includes a swelling tape 500 for bringing an electrode assembly 200 and a heat absorbing pouch 300 into close contact with each other.

The swelling tape 500 is attached along the perimeters of the electrode assembly 200 and the heat absorbing pouch 300 adjacent to each other, thereby serving to stably fix the position of the heat absorbing pouch 300. In addition, the electrode assembly 200 and the heat absorbing pouch 300 both wrapped with the swelling tape 500 are in close contact with each other by the tension of the swelling tape 500, and thus a heat absorbing action of the heat absorbing pouch 300 is promoted.

In the embodiment shown in the drawing, a plurality of electrode assemblies 200, for example, two electrode assemblies 200 are provided, and one heat absorption pouch 300 is disposed between the electrode assemblies 200. Accordingly, the swelling tape 500 is attached along an outer perimeter of the electrode assembly 200, and the heat absorbing pouch 300 sandwiched between the electrode assemblies 200 is in close contact with the electrode assemblies 200 at both sides thereof by the tension applied by the swelling tape 500 at the outer perimeter.

The swelling tape 500 may have a property of extending in a longitudinal direction when in contact with an electrolyte 400 filling a case 100.

A substrate layer of the swelling tape 500 may have a property of expanding in the longitudinal direction when in contact, for example, with a fluid such as a liquid. The shape of the substrate layer is not particularly limited and may be, for example, a film or sheet shape.

As a material of the substrate layer, any material may be used as long as the material has a property of expanding when in contact with a liquid. As an example, the substrate layer may be a polymer film or sheet and may be a film or sheet manufactured to have a property of expanding when in contact with a fluid through stretching or contracting treatment in a manufacturing process.

In an example, a substrate layer including a urethane bond, an ester bond, or an ether bond, or including a cellulose ester compound may be used as the substrate layer. Examples of the substrate layer may include an acrylate-based substrate layer, a urethane-based substrate layer, an epoxy-based substrate layer, or a cellulose-based substrate layer.

In a state in which the swelling tape 500 having such an expansion property is attached to a surface of the electrode assembly 200 and/or the heat absorbing pouch 300 through an adhesive layer, when the swelling tape 500 comes into contact with the electrolyte 400 filling the case 100, the swelling tape 500 forms a curved three-dimensional shape by the mutual balance between a force generated when the substrate layer expands and a fixing force of the adhesive layer.

A gap between the electrode assembly 200 and the case 100 is filled with the three-dimensional shape of the swelling tape 500, thereby preventing the electrode assembly 200 from pitching. As the electrode assembly 200 is stably supported, since problems such as a short circuit of the foil tab 210 disappear, the stability of the prismatic secondary battery 10 is improved. In addition, the heat absorbing pouch 300 in close contact with the electrode assembly 200 also stably absorbs heat, and even when the fragile portion fractures due to an increase in internal pressure and gas is discharged, the fragile portion 330 ejects gas in an intended direction without pitching, and thus it is possible to prevent fires more effectively.

The present invention has been described above in more detail through the drawings and embodiments. However, the configurations described in the drawings or the embodiments in the specification are merely embodiments of the present invention and do not represent all the technical ideas of the present invention. Thus, it is to be understood that there may be various equivalents and variations that can replace them at the time of filing the present application.

### [Description of reference numerals]

| | | | |
|---|---|---|---|
| 10: | prismatic secondary battery | 100: | case |
| 110: | main case | 120: | cap plate |
| 122: | electrode terminal | 200: | electrode assembly |
| 210: | foil tab | 300: | heat absorbing pouch |
| 310: | pouch | 320: | absorbent material |
| 330: | fragile portion | 400: | electrolyte |
| 500: | swelling tape | | |

## Claims

1. A prismatic secondary battery comprising:
a case made of a metal;
at least one electrode assembly accommodated in the case;
at least one heat absorbing pouch in contact with the at least one electrode assembly; and
an electrolyte filling the case,
wherein the at least one heat absorbing pouch includes an absorbent material impregnated with a liquid vaporized by absorbing heat, and a pouch configured to seal and accommodate the absorbent material.

2. The prismatic secondary battery of claim 1, wherein the at least one electrode assembly is a plurality of electrode assemblies, and
wherein the at least one heat absorbing pouch is disposed between the plurality of electrode assemblies.

3. The prismatic secondary battery of claim 1, wherein the at least one heat absorbing pouch is provided with a fragile portion that fractures when an internal pressure of the at least one heat absorbing pouch increases.

4. The prismatic secondary battery of claim 1, wherein the at least one electrode assembly is a winding type or a stack type.

5. The prismatic secondary battery of claim 1, wherein a fragile portion of the at least one heat absorbing pouch is disposed toward a foil tab of the at least one electrode assembly.

6. The prismatic secondary battery of claim 5, wherein the at least one electrode assembly is a unidirectional electrode assembly in which a pair of foil tabs are disposed on a same surface, and
wherein the fragile portion of the at least one heat absorbing pouch is provided as a pair of fragile portions so that the pair of fragile portions are disposed to be spaced apart from each other at positions corresponding to the pair of foil tabs.

7. The prismatic secondary battery of claim 1, wherein the absorbent material is a super absorbent matrix.

8. The prismatic secondary battery of claim 7, wherein the super absorbent matrix includes a super absorbent polymer (SAP) or a super absorbent fiber (SAF).

9. The prismatic secondary battery of claim 8, wherein the liquid is water.

10. The prismatic secondary battery of claim 8, wherein the liquid is water mixed with an additive, and
wherein the additive is a material for lowering a surface tension of water or a fire extinguishing agent.

11. The prismatic secondary battery of claim 1, further comprising a swelling tape configured to bring the at least one electrode assembly and the at least one heat absorbing pouch into contact with each other.

12. The prismatic secondary battery of claim 11, wherein the at least one electrode assembly is a plurality of electrode assemblies,
wherein the at least one heat absorbing pouch is disposed between the plurality of electrode assemblies, and
wherein the swelling tape is attached along an outer perimeter of the plurality of electrode assemblies.

13. The prismatic secondary battery of claim 12, wherein the swelling tape extends in a longitudinal direction when in contact with the electrolyte filling the case.
